# EUROPÄISCHE PATENTSCHRIFT

(11) **EP 2 383 147 B1**
(45) Veröffentlichungstag und Bekanntmachung des Hinweises auf die Patenterteilung: **04.03.2015**
(21) Anmeldenummer: 11161318.8
(22) Anmeldetag: 06.04.2011
(51) Int. Cl.: B60Q 1/14

(54) **Verfahren und Vorrichtung zum Betreiben einer Beleuchtungseinrichtung eines Fahrzeugs**
Method and apparatus for operating a lighting device of a vehicle
Procédé et dispositif de fonctionnement d'un dispositif d'éclairage d'un véhicule

(30) Priorität: 27.04.2010 DE 102010016653
(43) Veröffentlichungstag der Anmeldung: 02.11.2011
(73) Patentinhaber: Ford Global Technologies, LLC, Dearborn, MI 48126 (US)
(72) Erfinder: Müller, Holger, 50735, Köln (DE); Neibecker, Niels, 42929, Wermelskirchen (DE); Haase, Sascha, 42929, Wermelskirchen (DE)
(74) Vertreter: Dörfler, Thomas

(56) Entgegenhaltungen:
- EP-A1- 1 977 929
- EP-A2- 1 491 402
- WO-A1-2006/084536
- DE-A1-102005 038 805
- DE-A1-102007 017 028

## Beschreibung

Die Erfindung betrifft ein Verfahren und eine Vorrichtung zum Betreiben einer Beleuchtungseinrichtung eines Fahrzeugs, insbesondere eines Kraftfahrzeugs, nach dem Oberbegriff von Anspruch 1.

Kraftfahrzeuge werden in zunehmendem Maße mit einem Automatikmodus für den Fernlichtbetrieb ausgestattet, wodurch das Fernlicht automatisch an- bzw. abgeschaltet werden kann. Da viele Fahrer das Fernlicht nur selten einschalten, kann durch einen Automatikmodus die Nutzungszeit des Fernlichts vergrößert und dadurch die Nachtsicht des Fahrers und somit die Sicherheit bei Nachtfahrten erhöht werden. Andererseits ist eine Möglichkeit für einen manuellen Eingriff des Fahrers notwendig, falls das Fernlicht im Automatikmodus in einer Verkehrssituation nicht wie erforderlich oder wie vom Fahrer erwartet ein- bzw. ausgeschaltet wird.

Aus der DE 10 2004 033 705 A1 ist ein Kraftfahrzeug mit einer Beleuchtungseinrichtung mit einem automatisch zu- oder abschaltbaren Fernlicht bekannt, wobei in Abhängigkeit von einem Signal einer Überwachungseinrichtung, das das Vorhandensein oder Nichtvorhandensein von Gegenverkehr anzeigt, das Fernlicht automatisch aus- bzw. wieder angeschaltet wird. Um dem Fahrer eine Wahlmöglichkeit zu geben, kann der automatische Fernlicht-Schaltbetrieb fahrerseitig zu- oder abgeschaltet werden.

In der gattungsgemäßen DE 10 2005 038 805 A1 wird ein Verfahren zum automatischen Schalten von Fernlicht beschrieben, wobei das Fernlicht auch im Automatikbetrieb durch Betätigen eines für die manuelle Fernlichtschaltung vorgesehenen Lenkstockhebels an- oder ausgeschaltet werden kann. Hierdurch wird gleichzeitig der Automatikbetrieb verlassen. Zur erneuten Aktivierung des Automatikbetriebs ist ein erneutes Betätigen des Hebels notwendig.

Gemäß der DE 10 2007 017 028 A1 ist bei einem Verfahren zum Betreiben der Beleuchtungseinrichtung eines Straßenfahrzeugs die Wirkung einer Bedienhandlung von einem vorherigen Schaltzustand und/oder Betriebsmodus der Beleuchtungseinrichtung abhängig. Wird durch eine Bedienhandlung zum Ein- oder Ausschalten des Fernlichts der automatische Betriebsmodus deaktiviert, so ist zur erneuten Aktivierung des Automatikmodus eine weitere Bedienhandlung erforderlich.

Es hat sich jedoch gezeigt, dass bei den bekannten Verfahren der Fernlichtbetrieb immer noch in einem zu geringen Umfang genutzt wird. Für die Erhöhung der Verkehrssicherheit wäre es daher wünschenswert, wenn die Bedienung der Beleuchtungseinrichtung vereinfacht würde.

Vor diesem Hintergrund besteht eine Aufgabe der vorliegenden Erfindung darin, ein Verfahren und eine Vorrichtung zum Betreiben einer Beleuchtungseinrichtung eines Fahrzeugs, insbesondere eines Kraftfahrzeugs, mit verbesserter Bedienbarkeit zu schaffen.

Diese Aufgabe wird durch ein Verfahren sowie durch eine Vorrichtung wie in den unabhängigen Ansprüchen angegeben gelöst.

Bei einem erfindungsgemäßen Verfahren zum Betreiben einer Beleuchtungseinrichtung eines Fahrzeugs, insbesondere eines Kraftfahrzeugs, wobei die Beleuchtungseinrichtung mindestens ein Fernlicht umfasst, ist zum An- und Ausschalten des Fernlichts ein Automatikmodus vorgesehen. Im Automatikmodus wird das Fernlicht entsprechend einem automatisch ermittelten Soll-Schaltzustand geschaltet. Ist beispielsweise automatisch ermittelt worden, dass sich im Vorfeld des Fahrzeugs kein anderes Fahrzeug befindet, so dass die Voraussetzungen für den Einsatz des Fernlichts vorliegen, so ist der Soll-Schaltzustand des Fernlichts "ein", und das Fernlicht wird automatisch eingeschaltet. Ist andererseits beispielsweise Gegenverkehr festgestellt worden, so dass diese Voraussetzungen nicht vorliegen, so ist der Soll-Schaltzustand "aus", und das Fernlicht wird automatisch ausgeschaltet. Der Soll-Schaltzustand des Fernlichts kann auch auf andere Weise, beispielsweise mit Hilfe von Positionsdaten des Fahrzeugs, die etwa in einem Navigationssystem vorliegen, ermittelt werden; so kann es beispielsweise vorgesehen sein, dass im innerörtlichem Verkehr das Fernlicht stets ausgeschaltet ist.

Ferner ist eine manuelle Bedienung bzw. ein manueller Modus vorgesehen, wodurch das Fernlicht ebenfalls an- und ausgeschaltet werden kann. Die Möglichkeit einer manuellen Betätigung ist aus Sicherheitsgründen und zumindest für den Fall erforderlich, dass die Voraussetzungen für den Einsatz des Fernlichts fehlerhaft ermittelt worden sind oder dass der automatisch ermittelte Soll-Schaltzustand nicht der Erwartung des Fahrers entspricht. Durch eine manuelle Bedienung wird der Schaltzustand des Fernlichts verändert, der daher in der Regel vom Soll-Schaltzustand abweichen wird. Die manuelle Bedienung hat Vorrang vor dem Automatikmodus. Durch eine manuelle Bedienung wird daher der Automatikmodus übersteuert bzw. unterbrochen und der manuelle Modus wirksam.

Erfindungsgemäß wird nach einer manuellen Bedienung automatisch in den Automatikmodus gewechselt, wenn der aktuelle, durch die manuelle Bedienung erreichte Ist-Schaltzustand mit dem Soll-Schaltzustand übereinstimmt. Hierfür wird auch dann, wenn der Automatikmodus aufgrund einer erfolgten manuellen Betätigung unterbrochen ist, weiterhin ein aktueller Soll-Schaltzustand ermittelt und mit dem durch den manuellen Eingriff gewählten Schaltzustand verglichen. Sobald beide übereinstimmen, wird der Automatikmodus wieder wirksam. Da der Automatikmodus somit zu diesem Zeitpunkt denjenigen Schaltzustand des Fernlichts herstellen würde, der vom Fahrer bereits manuell veranlasst worden ist, ergibt sich bei der Rückkehr zum Automatikmodus keine Veränderung des Schaltzustands. Der Automatikmodus wirkt sich erst dann wieder auf den Schaltzustand des Fernlichts aus, wenn eine erneute Veränderung des Soll-Schaltzustands ermittelt und das Fernlicht automatisch entsprechend dem Soll-Schaltzustand geschaltet wird.

Wenn manuell ein anderer Schaltzustand gewählt worden ist als es dem Soll-Schaltzustand entspricht, so erfolgt das Wechseln in den Automatikmodus dann, wenn der Soll-Schaltzustand sich aufgrund des Eingabesignals erneut verändert. Ist manuell der gleiche Schaltzustand wie der Soll-Schaltzustand gewählt worden oder wird durch eine erneute manuelle Betätigung der Soll-Schaltzustand wieder hergestellt, so erfolgt die Rückkehr in den Automatikmodus sofort.

Dadurch, dass nach einem manuellen Schalten des Fernlichts automatisch wieder in den Automatikmodus gewechselt wird, ist keine Bedienung durch den Fahrer notwendig, um wieder in den Automatikmodus zu gelangen. Ferner ergibt sich für den Fahrer dadurch, dass dann, wenn der manuell geschaltete Schaltzustand und der automatisch ermittelte Soll-Schaltzustand übereinstimmen, in den Automatikmodus gewechselt wird, zu diesem Zeitpunkt kein Unterschied zum gewohnten manuellen Schaltverhalten. Das erfindungsgemäße Verfahren erlaubt daher eine einfache und intuitive Bedienung und ermöglicht gleichzeitig, ohne den Fahrer mit zusätzlichen Schaltvorgängen zu belasten, eine nahezu durchgängige Nutzung des Automatikmodus und einen optimalen Einsatz des Fernlichts.

In einer bevorzugten Ausführungsform des erfindungsgemäßen Verfahrens wird der Automatikmodus bereits beim Einschalten eines Fahrlichts, das insbesondere mindestens ein Abblendlicht und mindestens ein Fernlicht umfasst, aktiviert und für die Steuerung des Fernlichts wirksam. Das Anschalten des Fernlichts kann sowohl zusätzlich als auch alternativ zum Abblendlicht erfolgen. Das Fahrlicht kann manuell durch einen Schalter oder automatisch eingeschaltet werden. Insbesondere kann das Fahrlicht aufgrund eines Signals eines Helligkeitssensors bei Unterschreiten einer vorgegebenen Grenzhelligkeit der Umgebung oder auch aufgrund von Positionsdaten des Fahrzeugs aus einem Navigationssystem, die beispielsweise einen Tunnel anzeigen, eingeschaltet werden. Dadurch, dass mit dem Einschalten des Fahrlichts der Automatikmodus ohne eine zusätzliche Bedienhandlung des Fahrers wirksam wird, wird eine weiter vereinfachte Bedienung und eine maximierte Nutzungszeit des Automatikmodus erreicht.

Gemäß einer weiteren Form des Verfahrens, die nicht Teil der vorliegenden Erfindung ist, wird der Automatikmodus auch dann wieder wirksam, wenn seit der manuellen Bedienung eine vorgebbare Schaltzeit vergangen ist, ohne dass eine weitere manuelle Bedienung erfolgt ist. Hierfür ist keine Übereinstimmung des Ist-Schaltzustand des Fernlichts mit dem Soll-Schaltzustand erforderlich. Hierdurch wird erreicht, dass auch in einem Fall, in dem der vom Fahrer gewählte Schaltzustand des Fernlichts wahrscheinlich nicht mehr der aktuellen Verkehrssituation entspricht, in den Automatikmodus gewechselt wird, ohne dass hierfür eine manuelle Betätigung durch den Fahrer notwendig ist. Insbesondere kann hierdurch auch dann, wenn der Fahrer vergessen hat, dass er das Fernlicht entgegen dem automatisch bestimmten Soll-Schaltzustand manuell an- oder ausgeschaltet hat, eine möglichst weitgehende Benutzung des Automatikmodus und eine optimale Nutzung des Fernlichts sichergestellt werden.

Die Schaltzeit, nach der auch ohne Übereinstimmung des aktuellen Schaltzustands des Fernlichts mit dem Soll-Schaltzustand ein Wechsel in den Automatikmodus erfolgt, ist durch einen Bediener, insbesondere durch den Fahrer, einstellbar. Hierdurch kann erreicht werden, dass der Bediener die automatische Rückkehr in den Automatikmodus nach seinen Erwartungen einstellen kann, wodurch die Bedienung weiter vereinfacht und intuitiv gestaltet werden kann. Die Schaltzeit kann in vorteilhafter Weise auch von weiteren Parametern abhängen, beispielsweise von der aktuellen Geschwindigkeit, so dass die typische Dauer einer durch das Vorhandensein von Gegenverkehr gekennzeichneten Abblendsituation berücksichtigt werden kann.

In einer weiteren bevorzugten Ausführungsform der Erfindung kann manuell in den Automatikmodus gewechselt werden. Dadurch, dass durch eine manuelle Betätigung ein Überwechseln in den Automatikmodus erfolgen kann, kann unabhängig vom Ist- und vom Soll-Schaltzustand des Fernlichts der Automatikmodus in Kraft gesetzt werden. Hierdurch ist eine weiter verbesserte Nutzung des Automatikmodus möglich.

Eine erfindungsgemäße Vorrichtung zum Betreiben einer Beleuchtungseinrichtung eines Fahrzeugs, insbesondere eines Kraftfahrzeugs, wobei die Beleuchtungseinrichtung mindestens ein Fernlicht und in bevorzugter Weise mindestens ein Abblendlicht umfasst, umfasst eine Steuerungseinrichtung, die zum automatischen Verändern des Schaltzustands des Fernlichts in einem Automatikmodus entsprechend einem aus einem Eingabesignal automatisch ermittelten Soll-Schaltzustand eingerichtet ist. Weiterhin umfasst die Vorrichtung eine Bedienungseinrichtung zum manuellen Schalten des Fernlichts. Die Steuerungseinrichtung ist dementsprechend eingerichtet, aufgrund eines Schaltsignals der Bedienungseinrichtung das Fernlicht zu schalten. Das Schaltsignal der Bedienungseinrichtung hat Vorrang vor dem Automatikmodus, so dass dieser durch das Schaltsignal unterbrochen wird. Erfindungsgemäß kehrt die Steuerungseinrichtung in den Automatikmodus zurück, sobald der durch die manuelle Bedienung erreichte Schaltzustand mit dem Soll-Schaltzustand übereinstimmt. Hierdurch wird eine intuitive und besonders einfache Bedienung des Fernlichts bei optimaler Nutzbarkeit des Automatikmodus erreicht.

Gemäß einer bevorzugten Ausführungsform umfasst die erfindungsgemäße Vorrichtung Sensormittel zum Erzeugen des Eingabesignals. Die Sensormittel ermöglichen insbesondere eine Verkehrserkennung, beispielsweise das Erkennen von Gegenverkehr oder vorausfahrenden Fahrzeugen, insbesondere innerhalb eines vorgebbaren Entfernungs- und Winkelbereichs. Hierfür können beispielsweise optische Sensoren, insbesondere eine Kamera, oder auch Radar- oder Infrarotsensoren vorhanden sein. Das von den Sensormittel erzeugte Eingabesignal ermöglicht festzustellen, ob die Bedingungen zum Ein- bzw. Ausschalten des Fernlichts vorliegen, und aufgrund dessen den Soll-Schaltzustand zu ermitteln. Die Steuerungseinrichtung ist in bevorzugter Weise dazu ausgebildet, die zur Ermittlung des Soll-Schaltzustands des Fernlichts aus dem Eingabesignal notwendigen Datenverarbeitungs- bzw. Bildanalyseoperationen durchzuführen.

Weiterhin ist es bevorzugt, dass die erfindungsgemäße Vorrichtung Anzeigemittel zur Anzeige der Funktion des Automatikmodus aufweist. Hierdurch ist für den Fahrer erkennbar, in welchem Betriebsmodus die Steuerungseinrichtung aktuell arbeitet. Dadurch wird der Fahrer jederzeit in die Lage versetzt, zu erkennen, ob die Steuerungseinrichtung im Automatik- oder im manuellen Modus arbeitet, um ggf. dementsprechend weitere Bedienhandlungen vorzunehmen.

Die Erfindung wird nachfolgend anhand der Zeichnungen beispielhaft näher erläutert. Es zeigen:
- Fig. 1: ein Prinzipschaltbild für das Umschalten vom Automatikmodus in den manuellen Modus und zurück;
- Fig. 2: ein Prinzipschaltbild für das Schalten des Fernlichts;
- Fig. 3: eine Darstellung des Soll- und des Ist-Schaltzustands des Fernlichts sowie der Wirksamkeit des Automatikmodus in einer typischen Verkehrssituation.

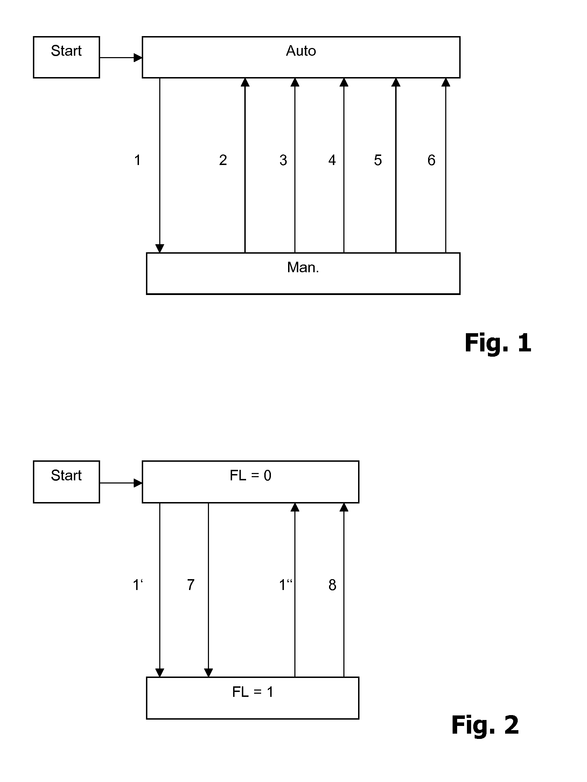

Gemäß Fig. 1 sind ein Automatikmodus und ein manueller Modus für das Schalten des Fernlichts vorgesehen. Beim Einschalten des Fahrlichts, ggf. bereits beim Starten des Kraftfahrzeugs, wird der Automatikmodus gestartet und sofort wirksam. Durch Betätigung eines Bedienelements zum manuellen Schalten des Fernlichts (Pfeil 1) wird das Fernlicht geschaltet. Hierdurch wird beispielsweise aus dem automatisch bestimmten Schaltzustand "Fernlicht aus" der Schaltzustand "Fernlicht an" gewählt oder aus dem automatisch bestimmten Schaltzustand "Fernlicht an" der Schaltzustand "Fernlicht aus" gewählt. Gleichzeitig wird vom Automatik- in den manuellen Modus gewechselt. Im manuellen Modus wird der Schaltzustand des Fernlichts durch die manuelle Betätigung bestimmt. Der Automatikmodus ist weiterhin in der Weise aktiv, dass automatisch ein aktueller Soll-Schaltzustand ermittelt wird, der für die Schaltung des Fernlichts jedoch nicht ohne Weiteres wirksam ist.

Eine Rückkehr in den Automatikmodus erfolgt gemäß Fig. 1, wenn zumindest eine der folgenden Bedingungen vorliegt:
- Der automatisch ermittelte aktuelle Soll-Schaltzustand ist "Fernlicht an" und der durch das manuelle Schalten gewählte Schaltzustand ist auch "Fernlicht an" (Pfeil 2).
- Der automatisch ermittelte Soll-Schaltzustand ist "Fernlicht aus" und der durch das manuelle Schalten gewählte Schaltzustand ist auch "Fernlicht aus" (Pfeil 3).
- Nach dem manuellen Schaltvorgang ist eine vorbestimmte Schaltzeit abgelaufen, ohne dass eine erneute manuelle Betätigung vorgenommen wurde (Pfeil 4), wobei diese nicht Teil der Erfindung ist.
- Ein Wechsel in den Automatikmodus wird durch andere Eingabesignale erzwungen, beispielsweise beim Übergang in den Stadtverkehr, der etwa aus Daten eines GPS-gestützten Navigationssystems ermittelt werden kann (Pfeil 5).
- Ferner kann ein manueller Übergang in den Automatikmodus möglich sein, beispielsweise durch ein erneutes Betätigen des Bedienelements (Pfeil 6).

Ist aus dem Automatikmodus im Schaltzustand "Fernlicht aus" manuell "Fernlicht aus" oder aus dem Automatikmodus im Schaltzustand "Fernlicht an" manuell "Fernlicht an" gewählt worden, so erfolgt die Rückkehr in den Automatikmodus sofort bzw. dieser wird nicht unterbrochen.

Wie in Fig. 2 gezeigt, kann beim Start des Automatik-Modus, der etwa beim Starten des Kraftfahrzeugs oder beim Einschalten des Fahrlichts erfolgt, zunächst vorgesehen sein, dass das Fernlicht aus- und nur das Abblendlicht eingeschaltet ist (FL = 0). Ein Wechsel vom Schaltzustand "Fernlicht aus" (FL = 0) in den Schaltzustand "Fernlicht an" (FL = 1) kann sowohl manuell durch Betätigen eines Bedienelements, beispielsweise eines Lichthebels an der Lenksäule, durch den Fahrer (Pfeil 1') als auch im Automatikmodus aufgrund einer Veränderung des automatisch ermittelten Soll-Schaltzustands erfolgen, wenn beispielsweise durch eine Kamera kein entgegenkommendes Fahrzeug mehr detektiert wird (Pfeil 7). Umgekehrt kann ein Übergang vom Schaltzustand "Fernlicht an" (FL = 1) in den Schaltzustand "Fernlicht aus" (FL = 0) sowohl manuell durch Betätigen eines Bedienelements durch den Fahrer als auch automatisch aufgrund einer Veränderung des Soll-Schaltzustands erfolgen, wenn beispielsweise ein entgegenkommendes Fahrzeug detektiert wird (Pfeil 8).

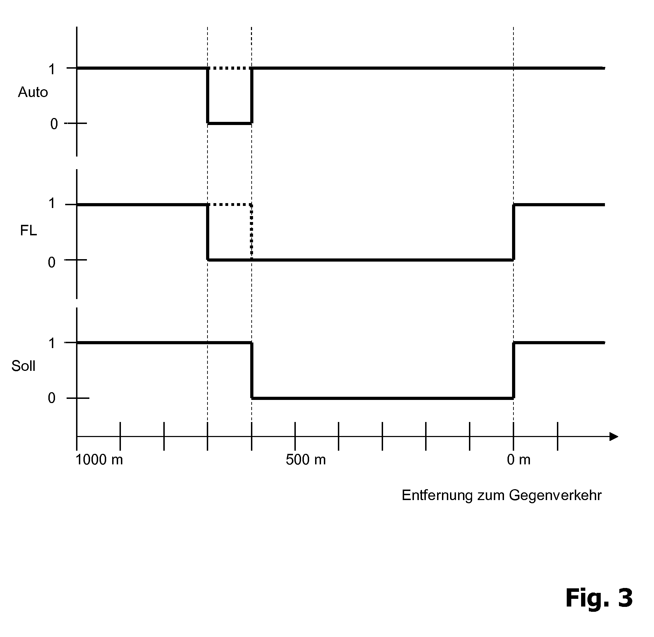

In Fig. 3 sind die Schaltzustände in einer typischen Fahrsituation dargestellt. Bei großem Abstand zu einem entgegenkommenden Fahrzeug ist der automatisch bestimmte Soll-Schaltzustand "Fernlicht an" (Soll = 1, untere Darstellung in Fig. 3), da das entgegenkommende Fahrzeug noch so weit entfernt ist, dass keine Blendwirkung durch das Fernlicht möglich ist. Da der Automatikmodus wirksam ist (Auto = 1, obere Darstellung), ist der Ist-Schaltzustand des Fernlichts "Fernlicht an" (FL = 1, mittlere Darstellung).

Kommt das entgegenkommende Fahrzeug näher und erfolgt kein Eingriff durch den Fahrer, so wird in einem Bereich, in dem eine Blendung möglich ist, beispielsweise bei 600 m, das fremde Fahrzeug beispielsweise mit Hilfe einer Kamera automatisch detektiert und der Soll-Schaltzustand auf "Fernlicht aus" gesetzt (Soll = 0). Aufgrund des wirksamen Automatikmodus (Auto = 1, punktierte Linie in der oberen Darstellung in Fig. 3) wird das Fernlicht zu diesem Zeitpunkt ausgeschaltet (FL = 0, punktierte Linie in der mittleren Darstellung). Wenn das entgegenkommende Fahrzeug vorbeigefahren ist, wird der Soll-Schaltzustand aufgrund eines entsprechenden Sensorsignals wieder auf "Fernlicht ein" (Soll = 1) gesetzt. Entsprechend wird aufgrund des wirksamen Automatikmodus das Fernlicht wieder eingeschaltet (FL = 1).

Erfolgt im Unterschied zum vorigen Beispiel bei Annäherung des entgegenkommenden Fahrzeugs ein Eingriff durch den Fahrer, wenn dieser beispielsweise bei einem Abstand von 700 m das Fernlicht ausschalten möchte, obwohl im Automatikmodus noch kein Abschalten des Fernlichts erfolgt ist, so kann dies durch eine manuelle Betätigung des Lichthebels geschehen. Wie in Fig. 3 gezeigt, wird hierdurch der Ist-Schaltzustand des Fernlichts von "Fernlicht an" (FL = 1) auf "Fernlicht aus" (FL = 0) gesetzt (durchgezogene Linie in der mittleren Darstellung von Fig. 3). Gleichzeitig wird der Automatikmodus außer Kraft gesetzt (Auto = 0, durchgezogene Linie in der oberen Darstellung). Am Soll-Schaltzustand ändert sich hierdurch nichts (Soll = 1). Bei weiterer Annäherung des entgegenkommenden Fahrzeugs wird in einer bestimmten Entfernung, wenn eine Blendung möglich ist, das entgegenkommende Fahrzeug automatisch detektiert, so dass der Soll-Schaltzustand von "Fernlicht an" (Soll = 1) zu "Fernlicht aus" (Soll = 0) wechselt. Nun stimmt der Soll-Schaltzustand mit dem Ist-Schaltzustand wieder überein, so dass der Automatikmodus wieder wirksam wird (Auto = 1, durchgezogene Linie in der oberen Darstellung). Wird das entgegenkommende Fahrzeug nicht mehr detektiert, so wird wie im vorhergehenden Beispiel der Soll-Schaltzustand wieder auf "Fernlicht an" gesetzt (Soll = 1) und das Fernlicht eingeschaltet (FL = 1).

Es ist daher kein manueller Eingriff erforderlich, um wieder zum Automatikmodus zurückzukehren.

### Bezugszeichenliste

- 1, 1', 1": Pfeil (Bedienhandlung)
- 2: Pfeil (Soll = 1 und FL = 1)
- 3: Pfeil (Soll = 0 und FL = 0)
- 4: Pfeil (Schaltzeitablauf)
- 5: Pfeil (anderes Eingabesignal)
- 6: Pfeil (manueller Wechsel in den Automatikmodus)
- 7: Pfeil (manuelles Ausschalten)
- 8: Pfeil (automatisches Ausschalten)

## Patentansprüche

1. Verfahren zum Betreiben einer Beleuchtungseinrichtung eines Fahrzeugs mit mindestens einem Fernlicht, wobei ein Automatikmodus zum automatischen Schalten des Fernlichts entsprechend einem Soll-Schaltzustand und ein manueller Modus zum manuellen Schalten des Fernlichts vorgesehen sind, wobei bei einem manuellen Schalten des Fernlichts vom Automatikmodus in den manuellen Modus gewechselt wird,
**dadurch gekennzeichnet, dass**
automatisch in den Automatikmodus gewechselt wird, wenn der aktuelle Schaltzustand mit dem Soll-Schaltzustand übereinstimmt.

2. Verfahren nach Anspruch 1,
**dadurch gekennzeichnet, dass**
der Automatikmodus durch Einschalten eines Fahrlichts wirksam wird.

3. Verfahren nach Anspruch 1 oder 2,
**dadurch gekennzeichnet, dass**
nach einem manuellen Schalten des Fernlichts dann in den Automatikmodus gewechselt wird, wenn seit dem manuellen Schalten eine vorgebbare Schaltzeit vergangen ist, ohne dass ein weiteres manuelles Schalten erfolgt ist.

4. Verfahren nach Anspruch 3,
**dadurch gekennzeichnet, dass**
die Schaltzeit durch einen Bediener einstellbar ist und/oder von aktuellen Fahrparametern abhängig ist.

5. Verfahren nach einem der Ansprüche 1 bis 4,
**dadurch gekennzeichnet, dass**
manuell in den Automatikmodus gewechselt werden kann.

6. Vorrichtung zum Betreiben einer Beleuchtungseinrichtung eines Fahrzeugs mit mindestens einem Fernlicht, umfassend eine Steuerungseinrichtung und eine Bedienungseinrichtung, wobei die Steuerungseinrichtung zum Verändern des Schaltzustands des Fernlichts in einem Automatikmodus entsprechend einem aus einem Eingabesignal ermittelten Soll-Schaltzustand und in einem manuellen Modus entsprechend einem Schaltsignal der Bedienungseinrichtung ausgebildet ist, wobei der Automatikmodus durch ein Schaltsignal der Bedienungseinrichtung unterbrochen wird,
**dadurch gekennzeichnet, dass**
die Steuerungseinrichtung zur automatischen Rückkehr in den Automatikmodus nach einer manuellen Bedienung eingerichtet ist, wenn der durch die manuelle Bedienung erreichte Schaltzustand mit dem Soll-Schaltzustand übereinstimmt.

7. Vorrichtung nach Anspruch 6,
**dadurch gekennzeichnet, dass**
die Vorrichtung weiterhin Sensormittel zum Erzeugen des Eingabesignals in Abhängigkeit von einer Verkehrssituation umfasst.

## Claims

1. Method for operating a lighting device of a vehicle with at least one upper beam, with an automatic mode being provided for automatically switching the upper beam corresponding to a desired switching state and with a manual mode being provided for manually switching the upper beam, in which case manual switching of the upper beam results in a change from the automatic mode to the manual mode,
**characterized in that**
there is an automatic change to the automatic mode when the present switching state corresponds to the desired switching state.

2. Method according to Claim 1,
**characterized in that**
the automatic mode is made effective by a headlight being switched on.

3. Method according to Claim 1 or 2,
**characterized in that**
after manual switching of the upper beam, there is a change into the automatic mode when a predeterminable switching time has elapsed since the manual switching without a further manual switching having been performed.

4. Method according to Claim 3,
**characterized in that**
the switching time can be set by an operator and/or is dependent on present driving parameters.

5. Method according to one of Claims 1 to 4,
**characterized in that**
it is possible to change over to the automatic mode manually.

6. Apparatus for operating a lighting device of a vehicle with at least one upper beam, comprising a control device and an operating device, with the control device being designed to alter the switching state of the upper beam in an automatic mode corresponding to a desired switching state determined from an input signal and, in a manual mode, corresponding to a switching signal of the operating device, with the automatic mode being interrupted by a switching signal from the operating device,
**characterized in that**
the control device is designed to automatically revert back to the automatic mode after manual operation when the switching state achieved by the manual operation corresponds to the desired switching state.

7. Apparatus according to Claim 6,
**characterized in that**
the apparatus furthermore comprises sensor means for generating the input signal as a function of a traffic situation.

## Revendications

1. Procédé servant à faire fonctionner un dispositif d'éclairage d'un véhicule comprenant au moins un feu de route, un mode automatique servant à commuter automatiquement le feu de route conformément à un état de commutation de consigne et un mode manuel servant à commuter manuellement le feu de route étant prévus, une commutation manuelle du feu de route donnant lieu à un basculement du mode automatique en mode manuel,
**caractérisé en ce**
**qu'**un basculement automatique en mode automatique a lieu lorsque l'état de commutation actuel coïncide avec l'état de commutation de consigne.

2. Procédé selon la revendication 1, **caractérisé en ce que** le mode automatique devient actif en allumant un feu de circulation.

3. Procédé selon la revendication 1 ou 2, **caractérisé en ce qu'**après une commutation manuelle du feu de route, un basculement en mode automatique a ensuite lieu lorsqu'un temps de commutation pouvant être prédéfini s'est écoulé depuis la commutation manuelle, sans qu'une nouvelle commutation manuelle a eu lieu.

4. Procédé selon la revendication 3, **caractérisé en ce que** le temps de commutation est réglable par un opérateur et/ou est dépendant de paramètres de conduite actuels.

5. Procédé selon l'une des revendications 1 à 4, **caractérisé en ce qu'**il est possible de basculer manuellement en mode automatique.

6. Dispositif servant à faire fonctionner un dispositif d'éclairage d'un véhicule comprenant au moins un feu de route, comprenant un dispositif de contrôle et un dispositif de commande, le dispositif de contrôle étant conçu pour modifier l'état de commutation du feu de route dans un mode automatique conformément à un état de commutation de consigne déterminé à partir d'un signal d'entrée et dans un mode manuel conformément à un signal de commutation du dispositif de commande, le mode automatique étant interrompu par un signal de commutation du dispositif de commande,
**caractérisé en ce que**
le dispositif de contrôle est conçu pour revenir automatiquement en mode automatique après une commande manuelle lorsque l'état de commutation obtenu par la commande manuelle coïncide avec l'état de commutation de consigne.

7. Dispositif selon la revendication 6, **caractérisé en ce que** le dispositif comprend en outre des moyens de détection destinés à générer le signal d'entrée en fonction d'une situation de trafic.
